# EUROPEAN PATENT SPECIFICATION

(11) **EP 1 261 153 B1**
(45) Date of publication and mention of the grant of the patent: **22.10.2003**
(21) Application number: 01440131.9
(22) Date of filing: 14.05.2001
(51) Int. Cl.: H04B 10/18, H04J 14/02

(54) **Optical module for a parallel dispersion management**
Optiches Modul zur parallelen Dispersionsverwaltung
Module optique pour gestion de dispersion en parallèle

(43) Date of publication of application: 27.11.2002
(73) Proprietor: ALCATEL, 75008 Paris (FR)
(72) Inventor: Leclerc, Olivier, 91240 Saint Michel S/Orge (FR); Brindel, Patrick, 91310 Longpont S/Orge (FR)
(74) Representative: Rausch, Gabriele, Dr.

(56) References cited:
- EP-A- 0 743 771
- WO-A-01/19007
- WO-A-99/66660
- DANY B ET AL: "Transoceanic 4X4 Gbit/s system combining dispersion-managed soliton transmission and new 'black-box' in-line optical regeneration" ELECTRONICS LETTERS, IEE STEVENAGE, GB, vol. 35, no. 5, 4 March 1999 (1999-03-04), pages 418-420, XP006011840 ISSN: 0013-5194

## Description

The present invention relates to an optical module as set forth in the preamble of claim 1.

The expansion of a wide range of new services involves rapid growth in the transmission capacity of telecommunications networks. A key issue is the control of the quality of the transmission data along the whole link. Dispersion management (DM) appears to be a very powerful technique for enhancing the quality of wavelength division multiplex (WDM) transmission systems. The data are transmitted through so called dispersion-managed pulses or solitons. At higher bit rates (i.e. starting at 40Gbit/s and above), inline optical regeneration based on both intensity and phase modulation (IM-PM) is a helpful and powerful tool for enabling error-free transmission over transoceanic distances. Owing to amplitude fluctuations induced by IM, a narrow bandpass optical filter must be added to the synchronous modulation. However, filters have been shown to be only of poor efficiency in stabilizing the energy of a DM soliton.

To overcome this problem, B. Dany et al proposed in "Transoceanic 4x40Gbit/s system combining dispersion-managed soliton transmission and new "black-box" in-line optical regeneration", Electron. Lett., 1999, 35, (5), pp.418-420, a local periodic conversion between a DM soliton and a standard nonlinear Schrödinger (NLS) soliton, thus restoring the filter efficiency for stabilizing amplitude fluctuations. It was tested for data transmission via a single channel.

In "Simultaneously regenerated 4x40Gbit/s dense WDM transmission over 10,000km using a single 40GHz InP Mach-Zehnder modulator", Electron. Lett., 2000, 36, (18), pp.1574-1575, from O. Leclerc et al. is discussed a generalization of the precedent procedure for four channels. A simultaneous optical regeneration (in line) of the four channels is obtained in a reliable polarization insensitive and wavelength independent Mach-Zehnder packaged modulator. Prior to be optically regenerated, the channels are spectrally demultiplexed. The optical regeneration scheme consists first in an amplification stage providing near NLS soliton average power in a conversion fiber. DM solitons from each WDM channel are hence converted into NLS solitons at the output of the fiber and are then spectrally filtered through optical filters with optimized bandwidth. All four WDM channels are then recombined through a multiplexer and simultaneously input in the packaged Mach-Zehnder modulator. Through this approach all channels are demultiplexed and one fiber per channel is used. Consequently, one dedicated amplifier per channel is needed.

Problem arises when this procedure is applied for dense WDM technology based now on even more then 32 channels. Indeed, one conversion fiber must be taken for each existing channel. And since a dedicated amplifier per channel is then needed, it will be a very cost effective solution. Also an optimization of the volume when packaging the whole system will be almost impossible.

It is an object of the present invention to find a way to reduce the number of conversion fibers and optical amplifier such to allow to use that procedure when dense WDM technology is applied.

This object is attained by an optical module as claimed in claim 1.

The present invention is based on the advantageous use of optical conversion fibers not only for a single channel but for sets of channels chosen in a precise way out of the used multi-channel WDM grid. The sets of channels are defined such that four wave mixing are or negligible or of a negligible effect.

Further advantageous features of the invention are defined in the dependent claims and will become apparent from the following description and the drawing.

One embodiment of the invention will now be explained in more detail with reference to the accompanying drawing, in which:
Fig. 1 is a schematic view of an optical module for sets of largely spaced WDM channels;
Fig. 2 is a schematic view of an optical module for sets of adjacent channels pairs.

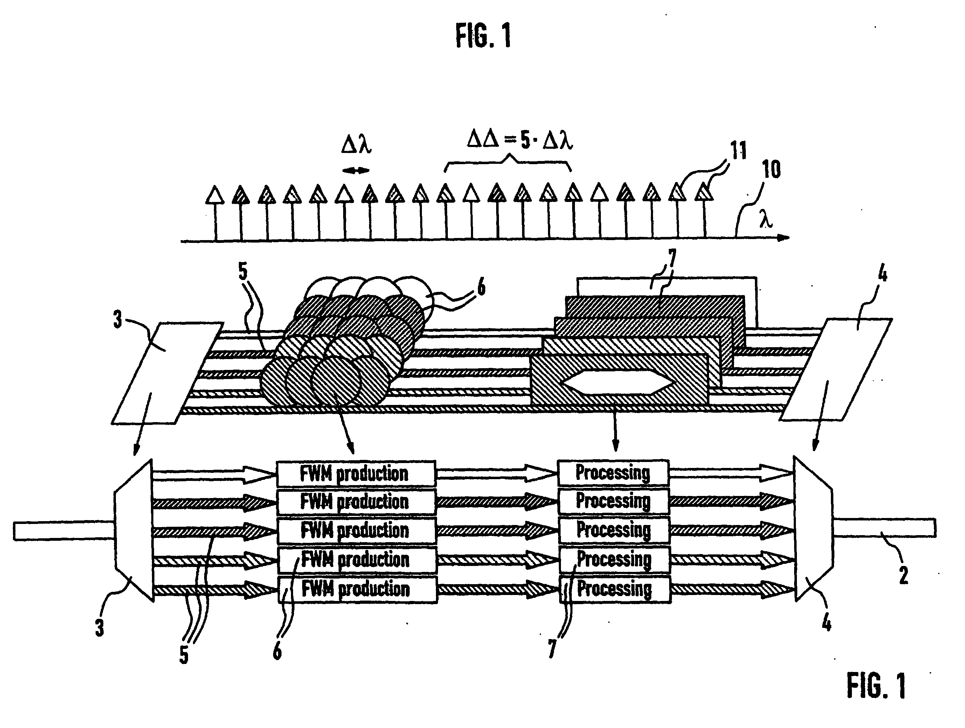

On Fig.1 is shown a schematic view of an optical module according to the invention. Data signals carried by different optical channels out of a multi-channel wavelength division multiplex are transmitted to a demultiplexer DMUX 3 via an input optical fiber 1 of the optical module. They leave the optical module via an output optical fiber 2 after passing through a multiplexer MUX 4.

Between the DMUX 3 and the MUX 4 are connected in parallel different portions of optical fibers 5, each one intended for a different set of channels. The choice of the channels for each set will be described below. The portions of optical fibers 5 consist of conversion fibers 6 with specific dispersion map where the set of channels are converted into NLS solitons via near nonlinear Schrödinger (NLS) soliton average power. These NLS solitons are transmitted through a inline processing mean 7 e.g. a filter like a Fabry-Perot one or a regenerator (1R, 2R or even 3R for WDM reshaping, reamplication and retiming) before being recombined by the MUX 4 if necessary using an optical selective multiplexer. Later may removes generated FWM products by construction.

The choice of the channels for each set out of the used multi-channel (dense) wavelength division multiplex (DWDM) grid is performed in such a way that FWM products occurring in the respective conversion fiber 6 will be negligible. On fig. 1 is shown an example of such a choice on the wavelength spectrum 10 displaying the channels 11 of the used DWDM grid. In this case the grid is build up out of a number of equidistant channels separated by an interval Δλ. Every fifth channel out of the DWDM grid can be combined together to build a set intended for a specific conversion fiber 5. The interval ΔΛ between each non-adjacent channel of a specific set (here separated by 5xΔλ) must be big enough that FWM products occurring in the conversion fiber 6 will be negligible. Indeed the FWM shall not be such that it overlaps with a further channel of the same set.

The advantage of such construction is obvious by using a portion of conversion fiber 6 for several channels (a specific set) even by allowing FWM effects but in a controlled way. Indeed, the FWM products will occur on the wavelength spectrum 10 at a place where no channel was affected to this set. It is of course of importance to filter out these FWM products before all the channels of the used DWDM grid are combined together to leave the optical module via the output 2. This filtering may be performed by the inline processing mean 7 or even by the MUX 4 itself.

The choice of the interval ΔΛ between each chosen channel for a specific set can be different then 5xΔλ and must not be even constant over the whole DWDM grid. It depends on the actual parameters of the optical module (physical properties of the conversion fibers and/or number of used parallel conversion fibers 5) as well as the chosen DWDM grid.

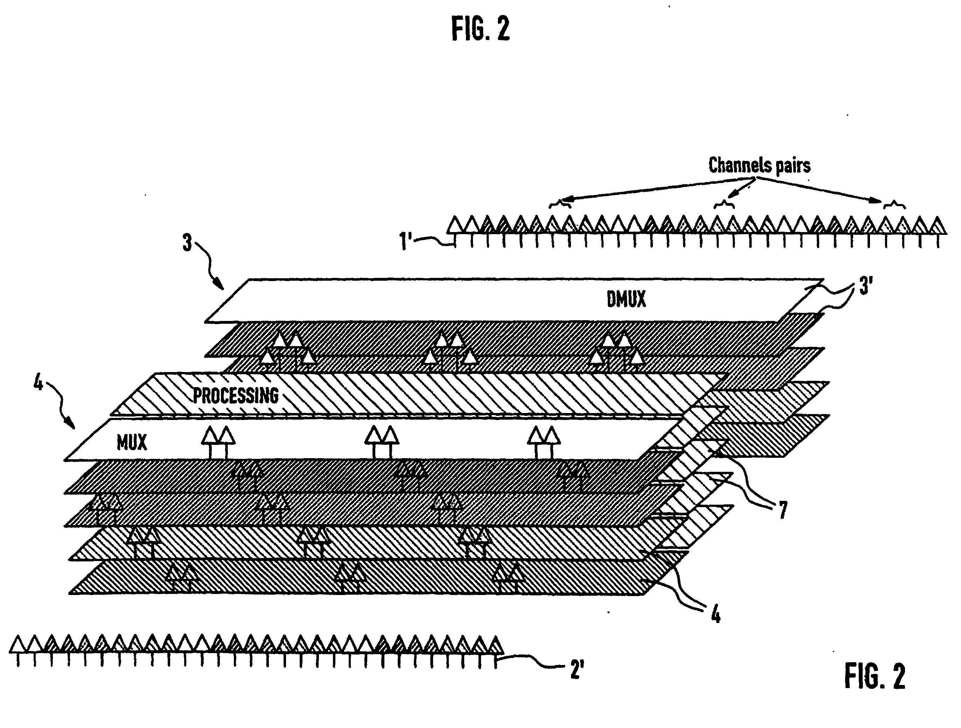

On fig. 2 is shown a schematic view of an optical module according to the invention and similar to the one of fig.1. This time, each set of channel intended for different parallel portions of optical fibers 5 will be build up out of pairs of adjacent channels separated by a certain interval in the used DWDM grid 1' at the input. Again, this interval between each pairs must not be constant over the whole DWDM grid. On fig. 2 is shown the different stages 3' of the DMUX 3 where all the channels of the DWDM are demultiplexed and directed to the different parallel portions of optical fibers 5. Each of these different parallel portions of optical fibers 5 are related to a specific conversion fiber 6 and to some inline processing means 7 (filter or regenerator like for the case of fig. 1).

The FWM products appearing after the NLS soliton conversion in this case between each chosen pair of channels must be such that it will not interfere with another pair of channels among the same set. This principle may be advantageously extended for sets of adjacent triplet or quadruplet of channels as long as the FWM products are controllable.

Each set of channels will be treated by some processing means 7 like a filter or a regenerator as in the optical module of fig. 1.

The FWM products are removed in each sub-multiplex by the MUX 4 through proper recombination to give the whole DWDM 2' at the output of the optical module.

With an optical module according to the present invention, it is possible to use a single conversion fiber for several channels. Also it is possible to benefit of the dispersive properties of the conversion fibers 6 to self-synchronize the set of channels in order to use a synchronous modulation stage. Possible wavelength selective optical adjustable delay line could be included. If needed, also a processing mean 7 will be used for several channels which will allow to optimize the setup of such optical module specially in view of the whole volume it will take. This is of high importance for a submarine network.

## Claims

1. Optical module for multi-channel wavelength division multiplex containing portions of optical conversion fiber (6) with specific dispersion map set in parallel
**characterized in, that**
each portion is intended to a different set of channels regularly spaced in a used multi-channel wavelength division multiplex grid.

2. Optical module according to claim 1 **characterized in, that** each of said sets of channels are made of non-adjacent channels in said used multi-channel wavelength division multiplex grid.

3. Optical module according to claim 1 **characterized in, that** each of said sets of channels are made of pairs of adjacent channels regularly spaced in said used multi-channel wavelength division multiplex grid.

4. Optical module according to claim 1 **characterized in, that** said portions are connected to the output of a demultiplexer (3) on one side and to the input of a multiplexer (4) on the other side.

5. Optical module according to claim 1 or 4 **characterized in, that** each said portions are connected to a respective inline processing mean (7) like a detector and/or a regenerator for said respective sets of channels.

6. Optical module according to one of the claim 1 to 5 **characterized in, that** said portions of optical conversion fiber with specific dispersion map are chosen such to achieve a synchronization of said channels.

## Patentansprüche

1. Ein optisches Modul für Mehrkanal-Wellenlängen-Multiplex, das Teile einer optischen Umwandlungs-Faser (6) mit speziellen Dispersionseigenschaften enthält, die parallel angeordnet sind,
**dadurch gekennzeichnet, dass**
jeder Teil für einen anderen Satz von Kanälen mit regelmäßigem Abstand in einem benutzten Mehrkanal-Wellenlängenmultiplex-Raster gedacht ist.

2. Ein optisches Modul gemäß Anspruch 1, **dadurch gekennzeichnet, dass** jeder der Sätze von Kanälen aus nicht benachbarten Kanälen im benutzten Mehrkanal-Wellenlängen-Multiplex-Raster aufgebaut ist.

3. Ein optisches Modul gemäß Anspruch 1, **dadurch gekennzeichnet, dass** jeder der Sätze von Kanälen aus Paaren benachbarter Kanäle aufgebaut ist, die im benutzten Mehrkanal-Wellenlängen-Multiplex-Raster einen gleichmäßigen Abstand haben.

4. Ein optisches Modul gemäß Anspruch 1, **dadurch gekennzeichnet, dass** die Teile an der einen Seite an den Ausgang eines Demultiplexers (3) und an der anderen Seite an den Eingang eines Multiplexers (4) angeschlossen sind.

5. Ein optisches Modul gemäß Anspruch 1 oder 4, **dadurch gekennzeichnet, dass** jedes der Teile an ein jeweiliges Inline-Verarbeitungs-Mittel (7) angeschlossen ist, wie z.B. einen Demodulator und/oder einen Regenerator für die jeweiligen Sätze von Kanälen.

6. Ein optisches Modul gemäß einem der Ansprüche 1 bis 5, **dadurch gekennzeichnet, dass** die Teile der optischen Umwandlungs-Faser mit speziellen Dispersionseigenschaften so gewählt werden, dass eine Synchronisation der Kanäle erreicht wird.

## Revendications

1. Module optique pour un multiplexage à division de longueur d'onde multicanal contenant des parties de fibre optique de conversion (6) avec une carte de dispersion spécifique disposées en parallèle,
**caractérisé en ce que**
chaque partie est prévue pour un ensemble différent de canaux régulièrement espacés dans une grille de multiplexage à division de longueur d'onde multicanal utilisée.

2. Module optique selon la revendication 1, **caractérisé en ce que** chacun desdits ensembles de canaux se compose de canaux non adjacents dans ladite grille de multiplexage à division de longueur d'onde multicanal utilisée.

3. Module optique selon la revendication 1, **caractérisé en ce que** chacun desdits ensembles de canaux se compose de paires de canaux adjacents régulièrement espacés dans ladite grille de multiplexage à division de longueur d'onde multicanal utilisée.

4. Module optique selon la revendication 1, **caractérisé en ce que** lesdites parties sont reliées à la sortie d'un démultiplexeur (3) d'un côté et à l'entrée d'un multiplexeur (4) de l'autre côté.

5. Module optique selon la revendication 1 ou 4, **caractérisé en ce que** chacune desdites parties est reliée à des moyens de traitement en ligne respectifs (7) tels qu'un détecteur et/ou un régénérateur pour lesdits ensembles respectifs de canaux.

6. Module optique selon l'une quelconque des revendications 1 à 5, **caractérisé en ce que** lesdites parties de fibre optique de conversion avec la carte de dispersion spécifique sont choisies de façon à réaliser une synchronisation desdits canaux.
